# EUROPEAN PATENT APPLICATION

(11) **EP 1 237 238 A2**
(43) Date of publication of application: **04.09.2002**
(21) Application number: 01303418.6
(22) Date of filing: 11.04.2001
(51) Int. Cl.: H01S 3/067

(54) **Gain-clamped optical fibre amplifier**

(30) Priority: 23.02.2001 KR 2001009207
(71) Applicant: Mercury Corporation, Incheon 404-250 (KR)
(72) Inventor: Lee, Kyu Haeng, Seoul, 152-050 (KR); Kim, Seung Taek, Inchoen, 402-201 (KR); Choi, Bong Su, Inchoen, 405-233 (KR); Park, Sang Woork, Eunpyung-gu, Seoul, 122-014 (KR); Song, Hyun Suk, -4-dong Kangdong-gu Seoul 134-024 (KR)
(74) Representative: Shackleton, Nicola

(57) **Abstract**

In a wavelength division multiplexing (WDM) system which has been rapidly developed, there are some drawbacks regarding self-phase modulation (SPM), cross-phase modulation (XPM), four-wave mixing (FWM), etc., according to adding and dropping of channels. The invention relates to a gain-clamped optical fiber amplifier including a fiber bragg grating (700) for intercepting and reflecting a light having a predetermined wavelength, for example, 1528nm or 1561nm, other than optical signals output from optical fiber amplifiers (erbium doped fiber amplifiers EDFAs) (300,500). The reflected light is fed back to the optical fiber amplifiers (300,500) by way of a circulator (600), a feed back loop (900) and a tap coupler (100). The gain-clamped optical fiber amplifier of the invention establishes a ring laser structure where the reflected light is repeatedly fed back to the optical fiber amplifiers (300,500), thus maintaining the amplification gain of the optical signals within an acceptable level of gain fluctuation in the optical WDM transmission system.

## Description

### BACKGROUND OF THE INVENTION

### 1. Field of the Invention

The present invention relates to an optical fiber amplifier (erbium doped fiber amplifier EDFA), specifically, to a gain-clamped optical fiber amplifier which maintains the amplification gain of optical signals constant.

### 2. Description of the Related Art

Recently, as optical communications have been developed, a wavelength division multiplexing (WDM) transmission system has been generalized. Besides, the optical communication systems have been constructed with network gradually, casting off point-to-point communication systems. Here, in the optical communication network system applying the wavelength division multiplexing transmission technique, the power level of optical signals may fluctuate by adding or dropping the optical signals. That is, if predetermined optical channels are dropped when transmitting optical signals of plural channels, the power of remaining optical signals may be drift by self-phase modulation (SPM) and cross-phase modulation (XPM). Otherwise, if predetermined optical channels are added, the power of overall optical signals may be affected by XPM and four-wave mixing (FWM). Moreover, in case of the general optical fiber amplifier, the gain characteristics of erbium-doped fibers (EDFs) in the optical fiber amplifier fluctuate by the power of input signals, which cause a fatal error in the optical communication system.

To solve the problem described above, there is disclosed a gain-clamped optical fiber amplifier which maintains the power of output optical signals constant without regard to the power of input optical signals. Here, several manners in constructing the gain-clamped optical fiber amplifier have been suggested as followings:
1. Maintaining the power of output optical signals constant by detecting the power of input optical signals and controlling the power of a predetermined pumping light source based on the detected input power;
2. Maintaining the power of output optical signals invariable by using an additional compensating signal while keeping the driving power of the pumping light source fixed;
3. Maintaining the power of output optical signals constant by resonating amplified spontaneous emission (ASE) through the ring cavity or the linear resonating structure to control the exhausting gains of the pumping light; and so on.

Among the three manners described above, the first manner that maintains the power of the pumping light source is achieved by controlling the electric current of a predetermined laser diode for generating the pumping light. Accordingly, it affects the laser diode compulsorily, thus exerting a harmful influence on the reliability of the optical fiber amplifier. Besides, in the second manner that uses the additional compensating signal, it requires that an additional compensating signal and a driving circuit be established in the optical fiber amplifier, which increases the production cost. Accordingly, in view of the present technique available, it is more effective to utilize a resonating structure, especially a ring laser structure.

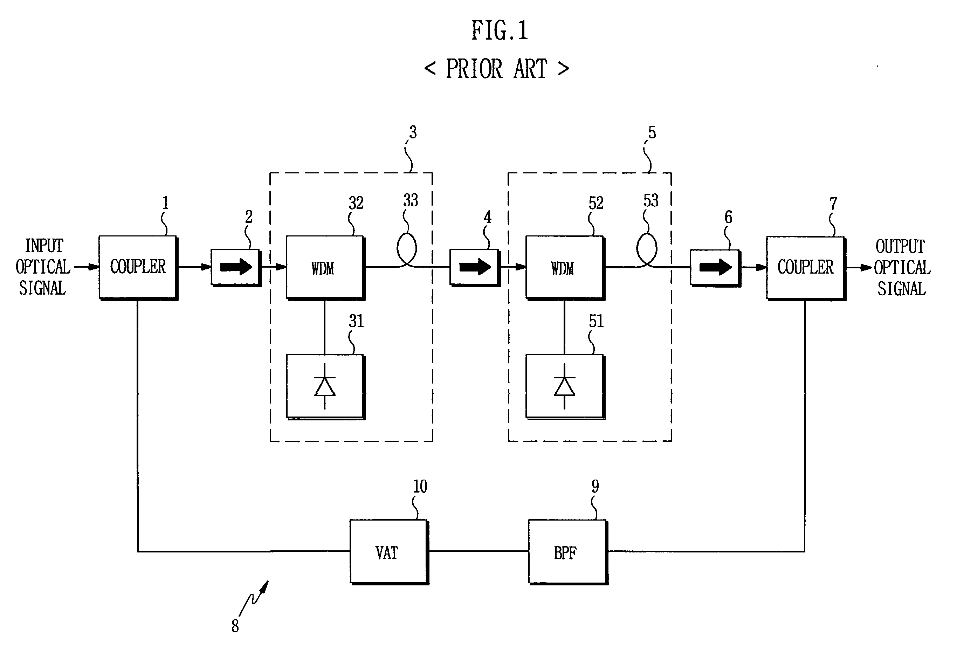

Fig. 1 shows a configuration of a conventional gain-clamped optical fiber amplifier having a general ring laser constructed in a manner that a first optical fiber amplifier 3 is connected with a second optical fiber amplifier 5 in series and a portion of output optical signals of the second optical fiber amplifier 5 is input to the first optical fiber amplifier 3 through a feedback path. That is, the input optical signals are coupled to the first optical fiber amplifier 3 by way of a coupler 1 and an isolator 2. The first optical fiber amplifier 3 includes a laser diode 31 generating a pumping light source, a wavelength division multiplexer (WDM) 32 coupling output light of the isolator 2 with output light of the laser diode 31, and an erbium-doped fiber (EDF) 33. Here, optical signals with wavelengths of 1530nm to 1560nm are used as the input optical signal, for example. Then, the output optical signals of the first optical fiber amplifier 3 travel to the second optical fiber amplifier 5 through an isolator 4. The second optical fiber amplifier 5 includes a laser diode 51, a WDM 52 and an EDF 53 the same manner with the first optical fiber amplifier 3. The output optical signals of the second optical fiber amplifier 5 are coupled with a coupler 7 through an isolator 6. The coupler 7 outputs 50% of the input optical signals and feeds back the rest 50% to a feedback loop 8. The feedback loop 8 includes a band-pass filter (BPF) 9 and a variable attenuator (VAT) 10. BPF 9 is set to pass a light with a predetermined wavelength other than optical signals with wavelengths of 1530nm to 1560nm among the optical signals fed back from the coupler 7. Preferably, BPF 9 passes a light with a predetermined wavelength. Then, the output optical signal of BPF 9 is attenuated by means of VAT 10 and forwarded to the first optical fiber amplifier 3.

In this configuration, a portion of the output lights of the first and second optical fiber amplifiers 3 and 5, that is, 50% of the output lights is fed back through the coupler 7 and BPF 9. Then, a lasing light is selected as a loop back light by BPF 9. The loop back light is input to the optical fiber amplifiers 3 and 5 together with the input optical signals of the coupler 1. That is, the input optical signals and the loop back light determine the overall power of the optical signals input to the optical fiber amplifiers 3 and 5. The loop back light together with input optical signals are amplified by the optical fiber amplifiers 3 and 5. Here, since the amplification gain in the optical fiber amplifiers 3 and 5 is determined according to the power of input optical signals, the amplification gain of the input optical signals is kept invariable by the loop back light. That is, if the power of input optical signals is low, the power of loop back light is increased to prevent the amplification gain of the input optical signals from being increased. If the power of input optical signals is high, the power of loop back light is lowered to prevent the amplification gain for the input optical signals from being lowered.

However, the gain-clamped optical fiber amplifier described above has several drawbacks as follows:
1. The amplification gain may fluctuate slightly as time goes by polarization-dependent losses (PDLs) of BPF 9 generating the loop back light. This gain drift causes a fatal fault in a cascade network. Besides, it is desirable to narrow the wavelength of the loop back light in order that the optical fiber amplifier may operate stably. However, the polarization-dependent losses are increased as much as the wavelength of BPF 8 is narrowed, thus deteriorating the stability of the optical fiber amplifier;

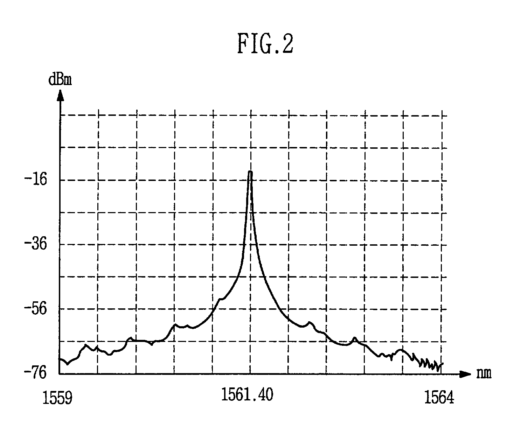

2. Fig. 2 illustrates a graph showing a wavelength spectrum of returned light, i.e., resonating light by a gain-clamped optical fiber using a general BPF, where center frequency is set to 1561nm. As shown in the figure, the general BPF has a narrow filtering characteristic on the basis of the center frequency. On the other hand, there exist lights having a predetermined level, higher than about -76dBm in this example, around overall wavelengths of 1559nm to 1564nm. If these lights having unwanted wavelengths are fed back to the optical fiber amplifiers 3 and 5, they affect the amplification gain of the optical fiber amplifier 3 and 5, which threatens the stability of the resonating light subsequently, thus causing the unstableness of the output lights;
3. In the above configuration, since the 50% optical signals output from the optical fiber amplifiers 3 and 5 are fed back through the coupler 7 in order to generate loop back light, it cause output losses corresponding to the amount of loop back light; and
4. In the configuration, since the loop back light generated through the feed back loop 8 are amplified by means of the optical fiber amplifiers 3 and 5 and transmitted together with normal optical signals, it may affect the reliability of the overall system.

### BRIEF SUMMARY OF THE INVENTION

Accordingly, the present invention is directed to a gain-clamped optical fiber amplifier that substantially obviates one or more of the problems due to limitations and disadvantages of the related art. That is, the gain-clamped optical fiber amplifier in accordance with the present invention can accomplish a satisfactory gain clamping characteristic and secure the stability of the overall system.

An object of the present invention is to provide a gain-clamped optical fiber amplifier comprising: an optical fiber amplifier having an erbium-doped fiber for amplifying optical signals transmitted through an optical line; a fiber bragg grating for intercepting and reflecting a light having a predetermined wavelength transmitted through the optical line; and a loop back means for forwarding the light reflected by the fiber bragg grating to the optical fiber amplifier.

Besides, the fiber bragg grating reflects a light having a specified wavelength other than wavelengths of optical signals transmitted through the optical line.

Furthermore, the loop back means includes a level adjusting means adjusting the reflected light level.

Moreover, it is another object to provide a gain-clamped optical fiber amplifier comprising: a coupling means for coupling optical signals transmitted through an optical line and a reflected light to the optical line; an optical fiber amplifier having an erbium-doped fiber for amplifying the optical signals transmitted through the optical line; a circulator for forwarding lights amplified by the optical fiber amplifier to a fiber bragg grating and connecting a light reflected by the fiber bragg grating with a feed back loop; a fiber bragg grating for intercepting and reflecting a light having a predetermined wavelength among input lights; and a feed back loop for feeding back the light reflected by the fiber bragg grating to the coupling means.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention:

In the drawings:
Fig. 1 is a block diagram showing a configuration of a conventional gain-clamped optical fiber amplifier;
Fig. 2 is a graph showing a wavelength spectrum of lasing light in the conventional gain-clamped optical fiber using a general BPF in Fig. 1;
Fig. 3 is a block diagram illustrating a configuration of a gain-clamped optical fiber amplifier in accordance with an embodiment of the present invention;
Fig. 4 is a graph showing a wavelength spectrum of resonating light in the gain-clamped optical fiber using a FBG in Fig. 3;
Fig. 5 is a graph showing a relation between input signal levels and amplification gains according to the configuration of Fig. 3;
Fig. 6 is a graph showing characteristics of gain fluctuation according to the configurations of Fig. 1 and Fig. 3; and
Figs. 7(A) and 7(B) show characteristics of power fluctuation of a remaining signal according to adding or dropping of optical signals, Fig 7(A) illustrating a characteristic obtained with the configuration of Fig. 1 and Fig 7(B) showing a characteristic with the configuration of Fig. 3.

### DETAILED DESCRIPTION OF THE INVENTION

Reference will now be made in detail to the preferred embodiments of the present invention, examples of which are illustrated in the accompanying drawings.

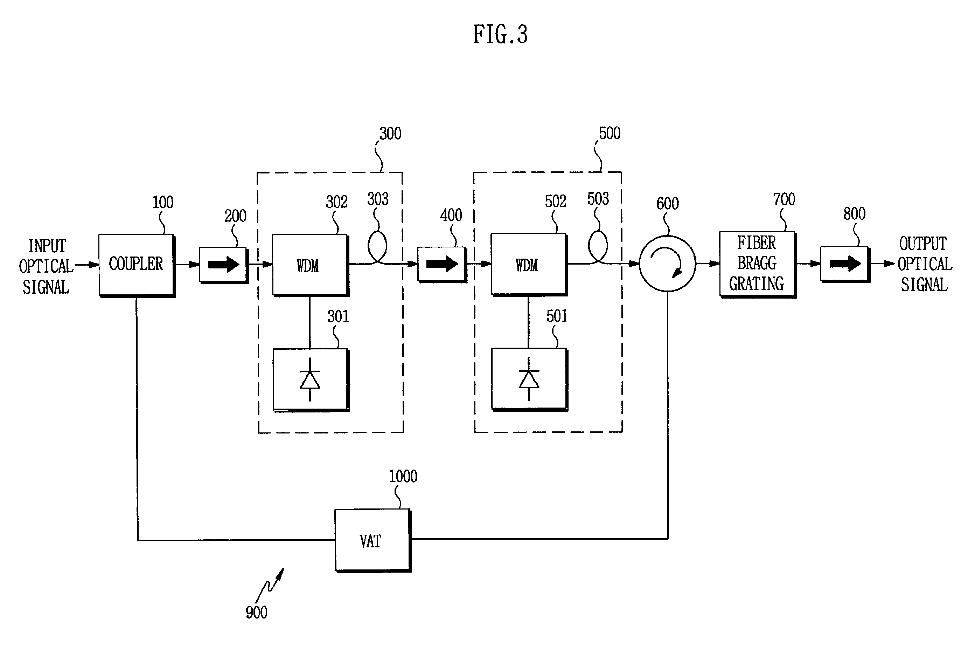

Now referring to Fig. 3, input optical signals are forwarded to a tap coupler 100 which receives a light fed back through a feed back loop as well. The tap coupler 100 receives the input optical signals and small portion of loop back light. The output light of the tap coupler 100 is input to a first optical fiber amplifier 300 through an isolator 200. The first optical fiber amplifier 300 includes a laser diode 301 generating a pumping light source, a wavelength division multiplexer (WDM) 302 coupling an output light of an isolator 200 and with an output light of the laser diode 301, and an erbium-doped fiber (EDF) 303 receiving the output light of WDM 302 and executing an amplification operation. Here, as described above, optical signals with wavelengths of 1530nm to 1560nm are used as the input optical signal and a light of 980nm is applied as a pumping source. Next, the output light from the first optical fiber amplifier 300 is forwarded to a second optical fiber amplifier 500 through an isolator 400. The second optical fiber amplifier 500 includes a laser diode 501, WDM 502 and EDF 503 as identical with the first optical fiber amplifier 500. A circulator 600 receives the output light of the second optical fiber amplifier 500 and connects it with a fiber bragg grating (FBG) 700. Besides, the circulator 600 couples a reflected light from FBG 700 with a feed back loop 900. FBG 700 does not pass a light having a specified wavelength but intercepts and reflects it. Here, the wavelength intercepted and reflected by FBG 700 can is set easily when manufacturing FBG 700. The intercepted and reflected wavelength of FBG 700 according to the present invention can be set voluntarily according to the system applied.

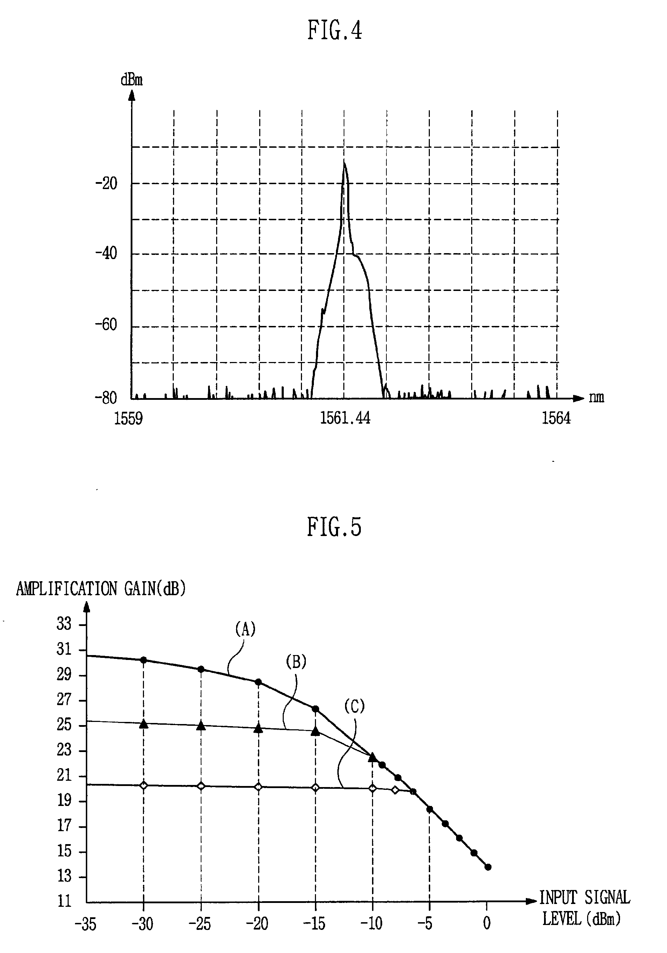

Fig. 4 shows a wavelength spectrum of resonating light in the gain-clamped optical fiber using FBG 700, where the intercepted wavelength is set to 1561nm. As shown in the figure, FBG 700 has such a characteristic that the wavelength of the resonating light is very narrow under 1nm and the wavelengths, except for the resonating light, have scarcely any remaining lights. Besides, FBG 700 has the good transparency at the wavelengths other than the intercepted and reflected wavelengths. That is, the light not intercepted by FBG 700 is transmitted through an isolator 800 without any additional losses.

Meantime, the light intercepted and reflected by FBG 700 is sent to the feed back loop 900 through the circulator 600. Then, a variable attenuator (VAT) 1000 forwards the input light to the tap coupler 100. Here, VAT 1000 is to set the level of the loop back light to a proper value, where the attenuation rate can be set appropriately according to the system.

Hereinafter, the operation of the gain-clamped optical fiber amplifier constructed as described above will be discussed.

If the optical signals on an optical line having wavelengths of 1530nm to 1560nm, for example, are input through the tap coupler 100 and the isolator 200 to the first optical fiber amplifier 300, the optical signals are amplified primarily by the first optical fiber amplifier 300, then, amplified secondarily by the second optical fiber amplifier 500. Here, amplifying the optical signals twice by means of the first and second optical fiber amplifiers 300 and 500 is against noise characteristics, which has nothing to do with the present invention. The optical signals amplified by the optical fiber amplifiers 300 and 500 are transmitted by way of the circulator 600, FBG 700 and isolator 800.

Meantime, the reflected light intercepted by FBG 700 is input to the feed back loop 900 through the circulator 600, then, forwarded to the optical fiber amplifiers 300 and 500 through the tap coupler 100, thus being amplified together with normal optical signals. Then, the amplified lights are input to FBG 700 through the circulator 600. FBG 700 reflects and forwards the lasing light to the optical fiber amplifiers 300 and 500 by way of the circulator 600, feed back loop 900 and tap coupler 100 continuously.

In the above configuration, the gain of the optical signals is fixed to a regular level by the loop back light, i.e., the reflected light fed back continuously by FBG 700. The amplification gain of the optical signals in the optical fiber amplifiers 300 and 500 is determined based on the overall power of the input optical signals. In the above configuration, since the reflected light of FBG 700 is input together with the input optical signals, the amplification gain in the optical fiber amplifiers 300 and 500 is determined based on the overall power of the input optical signals and the reflected light. Here, if the overall power of the optical signals input through the tap coupler 100 is lowered by channel dropping of transmitted light, the input optical signals are amplified with high amplification gain by the optical fiber amplifiers 300 and 500, thus increasing the signal level. The signal level of the reflected light is increased by setting the amplification gain of the reflected light to high, the reflected light being amplified together with the optical signals. That is, if the reflected light having a increased signal level is fed back to the optical fiber amplifiers 300 and 500, the overall power of the input optical signals is increased due to the reflected light, thus lowering the amplification gain of the optical signals transmitted. Accordingly, the optical signals transmitted can be amplified with regular amplification gain, regardless of the number of channels, by executing the above operations continuously. Moreover, when adding the channels, these operations are executed in the same manner.

Referring to Fig. 5 showing a relation between input signal levels and amplification gains according to the above configuration, (A) denotes an amplification gain characteristic of the optical fiber amplifiers 300 and 500 according to the input optical signal level, where the reflected light is intercepted not to input to the optical fiber amplifiers 300 and 500. (B) and (C) illustrate amplification gain characteristics of the optical fiber amplifiers 300 and 500 according to the input optical signal level, where the reflected light is fed back to the optical fiber amplifiers 300 and 500. As shown in the figures, it can be understood that regular amplification gain characteristics can be obtained where the reflected light is fed back to the optical fiber amplifiers 300 and 500 [(B),(C)], more than where the reflected light is not fed back to the optical fiber amplifiers 300 and 500 [(A)]. Moreover, (B) and (C) illustrate the difference where the signal level of the reflected light is set to be different respectively by adjusting VAT 1000 established in the feed back loop 900. That is, (B) shows where the signal level of the loop back light is set to be lower than (C). Accordingly, the amplification gain of the optical signals is decreased as much as the power level of the reflected light is set to high, however, the amplification gain of the optical signals is kept stable.

According to the embodiment discussed above, since the gain-clamped optical fiber amplifier does not apply the BPF with relatively large PDLs, the amount of the gain fluctuation can be decreased sharply, thus obtaining satisfactory gain-clamped characteristics.

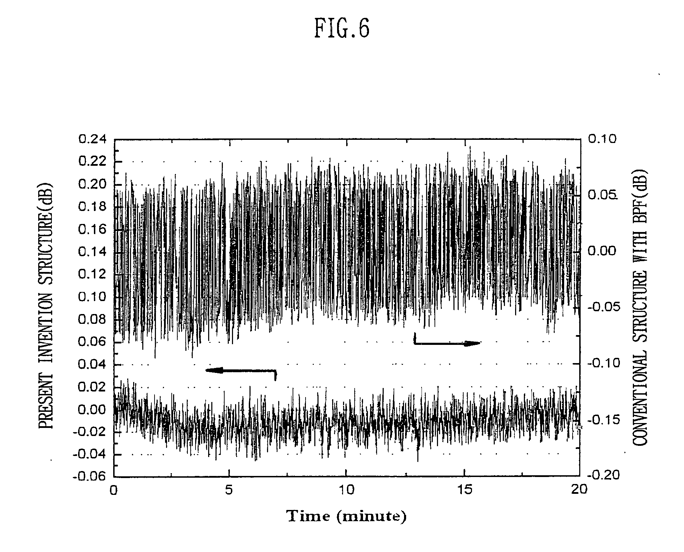

Fig. 6 is a graph showing characteristics of gain fluctuation according to the conventional structure in Fig. 1 and the structure of the present invention in Fig. 3. As shown in the figure, the amplification gain of the conventional structure fluctuates seriously up to a gain fluctuation width of 0.1dB approximately by PDLs of BPF. However, the amplification gain of the invention structure fluctuates slightly within a gain fluctuation width of 0.04dB, satisfactorily.

Furthermore, in the above embodiment, since the loop back light is generated by means of FBG having a good filtering characteristic, the gain stability of the optical fiber amplifier can be enhanced, as known from Fig. 2 to Fig. 4. Accordingly, it is possible to decrease the amount of overshoot and undershoot of remaining signals generated when adding or dropping the optical channels dynamically.

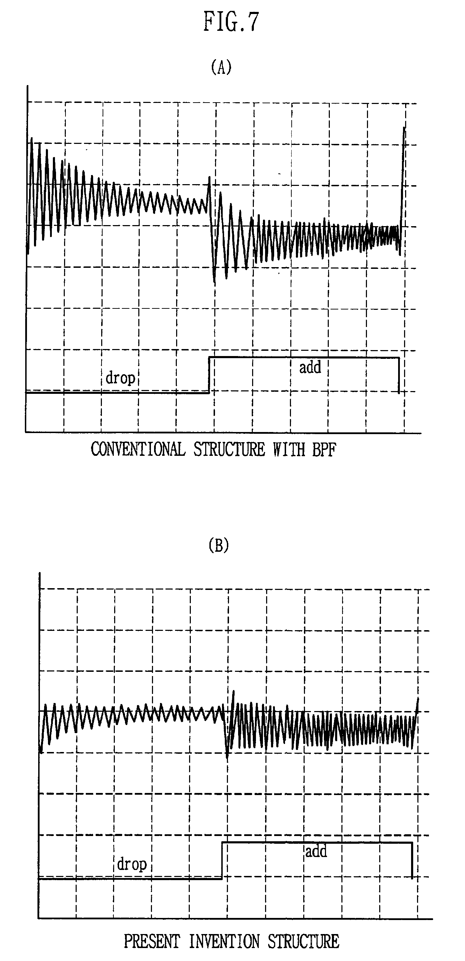

Lastly, Figs. 7(A) and 7(B) show characteristics of level fluctuation of a remaining signal, where dropping 15-channel when transmitting optical signals of 16-channel, or where adding 15-channel when transmitting an optical signal of 1-channel. Fig. 7(A) illustrates the characteristic according to conventional structure having BPF and Fig. 7(B) is according to the structure of the present invention. Besides, vertical division is 200mv in Fig. 7(A) and 100mV in Fig. 7(B). In the figures, the conventional structure shows that the peak-to-peak voltage difference of the remaining signals is 725mV approximately, whereas, the structure of the present invention shows 164mV, a quarter of the former. Accordingly, it is understood that the structure of the present invention maintains gain-clamped characteristics relatively stable even in the worst state by establishing relatively satisfactory overshoot and understood characteristics when adding and dropping the channels excessively, and decreases inhomogeneous effect significantly as well.

Besides, in the conventional structure shown in Fig. 1, the 50:50 coupler 7 is applied to feed back the output of the optical fiber amplifier 5, which causes output losses more than 50%. Whereas, in the structure of the invention, it is possible to minimize the amplification gain losses of the optical fiber amplifier since the normal optical signals output from the optical fiber amplifier 500 are transmitted through the circulator 600 and FBG 700 which do not cause any output losses, as understood with reference to Fig. 3 and Fig. 4.

Furthermore, the present invention prevent the loop back light from being transmitted through the optical line by means of FBG 700 securely, thus enhancing the reliability of the overall system. That is, the present invention accomplish a gain-clamped optical fiber amplifier which secures the stability of the overall system, maintaining satisfactory gain-clamped characteristics.

It will be apparent to those skilled in the art that various modifications and variations can be made in the gain-clamped optical fiber amplifier of the present invention without departing from the spirit or scope of the invention. Thus, it is intended that the present invention cover the modifications and variations of this invention provided they come within the scope of the appended claims and their equivalents.

## Claims

1. A gain-clamped optical fiber amplifier comprising:
an optical fiber amplifier having an erbium-doped fiber for amplifying optical signals transmitted through an optical line;
a fiber bragg grating for intercepting and reflecting a light having a predetermined wavelength transmitted through the optical line; and
a loop back means for forwarding the light reflected by the fiber bragg grating to the optical fiber amplifier.

2. The gain-clamped optical fiber amplifier as recited in claim 1,
wherein the fiber bragg grating reflects a light having a specified wavelength other than wavelengths of optical signals input through the optical line.

3. The gain-clamped optical fiber amplifier as recited in claim 1,
wherein the loop back means includes a level adjusting means adjusting the reflected light level.

4. The gain-clamping optical fiber amplifier as recited in claim 1,
wherein the level adjusting means is a variable attenuating means which can set attenuation degrees of reflected light level variably.

5. A gain-clamped optical fiber amplifier comprising:
a coupling means for coupling optical signals transmitted through an optical line and a reflected light from the optical line;
an optical fiber amplifier having an erbium-doped fiber for amplifying the optical signals transmitted through the optical line;
a circulator for forwarding lights amplified by the optical fiber amplifier to a fiber bragg grating and injecting a light reflected by the fiber bragg grating into a feed back loop;
a fiber bragg grating for intercepting and reflecting a light having a specified wavelength among input lights; and
a feed back loop for feeding back the light reflected by the fiber bragg grating to the coupling means.

6. The gain-clamped optical fiber amplifier as recited in claim 5,
wherein the fiber bragg grating reflects a light having a specified wavelength other than wavelengths of optical signals input through the optical line.

7. The gain-clamped optical fiber amplifier as recited in claim 5,
wherein the feed back loop includes a level adjusting means adjusting the reflected light level.

8. The gain-clamping optical fiber amplifier as recited in claim 5,
wherein the level adjusting means is a variable attenuating means which can set attenuation degree of reflected light level variably.
